# EUROPEAN PATENT APPLICATION

(11) **EP 4 570 949 A1**
(43) Date of publication of application: **18.06.2025**
(21) Application number: 24215444.1
(22) Date of filing: 26.11.2024
(51) Int. Cl.: C25B 1/02, C25B 9/15, C25B 9/70, C25B 9/17

(54) **HYDROGEN GAS GENERATION USING AMMONIA**

(30) Priority: 14.12.2023 US 202363610027 P; 17.04.2024 US 202418637695
(71) Applicant: The Boeing Company, Arlington, VA 22202 (US)
(72) Inventor: MOSTOWITZ, Matthew, Arlington, 22202 (US)
(74) Representative: Lissandrini, Marco

(57) **Abstract**

A hydrogen gas generation system comprises a reactor chamber, an elongate cathode, an ammonia inlet, a hydrogen gas outlet, and a collection outlet. The reactor chamber has an input end and an output end. A wall of the reactor chamber between the input end and the output end is an anode. The elongate cathode extends between the input end and the output end through an interior of the reactor chamber. The ammonia inlet is positioned to introduce a liquid ammonia into the reactor chamber such that the liquid ammonia flows in a direction from the input end to the output end. The hydrogen gas outlet at the output end, wherein a hydrogen gas generated in the reactor chamber exits the reactor chamber through the hydrogen gas outlet. The collection outlet is at the output end. Nitrogenous compounds exit the reactor chamber through the collection outlet.

## Description

### CROSS-REFERENCE TO RELATED APPLICATIONS

This application claims the benefit of U.S. Provisional Patent Application Serial No. 63/610,027, filed December 14, 2023, and entitled "Hydrogen Gas Generation Using Ammonia", as well as of US Non Provisional Patent Application Serial No. 18/637,695, filed April 17, 2024, and entitled "Hydrogen Gas Generation Using Ammonia", which are both incorporated herein by reference in their entirety.

### BACKGROUND INFORMATION

### 1. Field:

The present disclosure relates generally to fuel generation and in particular, to generation of hydrogen gas from ammonia.

### 2. Background:

Carbon emissions is of great concern in many industries. The reduction in carbon emissions has become a goal for many industries to reduce the effects of carbon on the climate. In the aviation industry, various efforts have been used to reduce carbon emissions. For example, airlines have performed route optimization, reduced taxiing times, and implemented strategies to reduce weight. Airlines have also made changes in maintenance schedules to increase fuel efficiency. Other efforts include retiring older aircraft and replacing those aircraft with more fuel efficient models.

With respect to aircraft, in addition to more fuel-efficient designs, newer propulsion systems are used that result in even lower levels of carbon emissions.

For example, aircraft are being developed that operate with propulsion systems that use hydrogen gas as a fuel. Hydrogen offers an advantage over currently used fuels. Hydrogen gas burns cleanly and only releases water vapor as compared to the carbon emissions released from current fuels. The technologies involved in hydrogen gas propulsion systems include hydrogen internal combustion engines, fuel cells, gas turbines, and other components.

### SUMMARY

An embodiment of the present disclosure provides a hydrogen gas generation system comprising a reactor chamber, an elongate cathode, an ammonia inlet, a hydrogen gas outlet, and a collection outlet. The reactor chamber has an input end and an output end. A wall of the reactor chamber between the input end and the output end is an anode. The elongate cathode extends between the input end and the output end through an interior of the reactor chamber. The ammonia inlet is positioned to introduce a liquid ammonia into the reactor chamber such that the liquid ammonia flows in a direction from the input end to the output end. The hydrogen gas outlet is at the output end, wherein a hydrogen gas generated in the reactor chamber exits the reactor chamber through the hydrogen gas outlet. The collection outlet is at the output end. Nitrogenous compounds exit the reactor chamber through the collection outlet.

Another embodiment of the present disclosure provides a hydrogen gas generation system comprising a reactor chamber, an elongate cathode, an ammonia inlet, a hydrogen gas outlet, a collection outlet, and an ultrasonic transducer. The reactor chamber has an input end and an output end. A wall of the reactor chamber between the input end and the output end is an anode. The elongate cathode extends between the input end and the output end through an interior of the reactor chamber. The ammonia inlet is positioned to input a pressurized liquid ammonia tangentially into the reactor chamber such that the pressurized liquid ammonia flows in a helical path towards the output end. The hydrogen gas outlet is at the output end. The collection outlet is at the output end. Nitrogenous compounds exit the reactor chamber through the collection outlet. The ultrasonic transducer system is configured to generate ultrasonic signals that increases hydrogen generation rates within the reactor chamber.

Still another illustrative embodiment of the present disclosure provides a hydrogen gas generation system comprising reactors. Each reactor in the reactors comprises a reactor chamber having an input end and an output end, wherein a wall of the reactor is an anode; an elongate cathode extending between the input end and the output end through an interior of the reactor chamber; an ammonia inlet positioned to input a pressurized liquid ammonia tangentially into the reactor chamber such that the pressurized liquid ammonia flows in a helical path towards the output end; a hydrogen gas outlet at the output end; a collection outlet at the output end, wherein nitrogenous compounds exit the reactor chamber through the collection outlet; and an ultrasonic transducer system configured to generate ultrasonic signals that increases hydrogen generation rates within the reactor chamber. The reactors are connected in series with the collection outlet of one reactor being connected to the ammonia inlet of a next reactor in the series.

Yet another illustrative embodiment of the present disclosure provides a method of generating hydrogen gas. A liquid ammonia is input through an ammonia inlet into a reactor chamber, wherein the liquid ammonia flows through the reactor chamber and wherein the wall of the reactor chamber is an anode and an elongate cathode is in the reactor chamber. An electric field is generated in between the anode and the elongate cathode in the reactor chamber such that a hydrogen gas is extracted from the liquid ammonia. The hydrogen gas output from a hydrogen gas outlet exits the reactor chamber.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is a pictorial representation of an aircraft in communication with satellites in accordance with an illustrative embodiment;
**Figure 2** is an illustration of a block diagram of a gas generation environment in accordance with an illustrative embodiment;
**Figure 3** is an illustration of a block diagram of a hydrogen gas generation system using multiple reactors in accordance with an illustrative embodiment;
**Figure 4** is an illustration of an isometric view of a reactor in accordance with an illustrative embodiment;
**Figure 5** is an illustration of a top view of a reactor in accordance with an illustrative embodiment;
**Figure 6** is an illustration of a schematic diagram of a hydrogen gas generation system with multistage reactors in accordance with an illustrative embodiment;
**Figure 7** is an illustration of a flowchart of a process for generating hydrogen gas in accordance with an illustrative embodiment;
**Figure 8** is an illustration of a flowchart of a process for outputting nitrogenous compounds in generating hydrogen gas in accordance with an illustrative environment;
**Figure 9** is an illustration of a flowchart of a process for inputting liquid ammonia to generate hydrogen gas in accordance with an illustrative embodiment;
**Figure 10** is an illustration of a block diagram of an aircraft manufacturing and service method in accordance with an illustrative embodiment; and
**Figure 11** is an illustration of a block diagram of an aircraft in which an illustrative embodiment may be implemented.

### DETAILED DESCRIPTION

The illustrative embodiments recognize and take into account one or more different considerations as described herein. For example, currently, cryogenic hydrogen is used in platforms such as aircraft. This form of hydrogen requires large amounts of volume within the aircraft for storage as well as the equipment and energy to meet the temperature requirements to maintain the hydrogen at cryogenic temperatures.

Thus, it is desirable to have another mechanism to supply hydrogen for fuel rather than using cryogenic hydrogen. One alternative involves generation of hydrogen gas from ammonia. The hydrogen gas can be used with currently available hydrogen gas propulsion systems. In one illustrative example, hydrogen gas can be generated from ammonia using electric fields generated between an anode and a cathode. Ultrasonic signals can also be used to increase hydrogen generation rates. Further, the Lorentz force from magnetic fields can be used to further increase the generation rates of hydrogen gas.

The use of ammonia to generate hydrogen gas in an aircraft results in a higher volumetric hydrogen content in generating hydrogen gas as compared to storing cryogenic hydrogen in the aircraft. Further, liquid ammonia has less issues with respect to storage and use.

Thus, the illustrative embodiments provide a method, apparatus, and system for generating hydrogen gas. In one illustrative example, a hydrogen gas generation system comprises a reactor chamber, an elongate cathode, an ammonia inlet, a hydrogen gas outlet, and a collection outlet. The reactor chamber has an input end and an output end. A wall of the reactor chamber between the input end and the output end is an anode. The elongate cathode extends between the input end and the output end through an interior of the reactor chamber. The ammonia inlet is positioned to introduce a liquid ammonia into the reactor chamber such that the liquid ammonia flows in a direction from the input end to the output end. The hydrogen gas outlet is at the output end, wherein a hydrogen gas generated in the reactor chamber exits the reactor chamber through the hydrogen gas outlet. The collection outlet is at the output end. Nitrogenous compounds exit the reactor chamber through the collection outlet.

In another example, a hydrogen gas generation system comprises a reactor chamber, an elongate cathode, an ammonia inlet, a hydrogen gas outlet, a collection outlet, an ultrasonic transducer, and permanent magnets at the upper and lower caps of the reactor chamber. The reactor chamber has an input end and an output end. A wall of the reactor chamber between the input end and the output end is an anode. The elongate cathode extends between the input end and the output end through an interior of the reactor chamber. The ammonia inlet is positioned to input a pressurized liquid ammonia tangentially into the reactor chamber such that the pressurized liquid ammonia flows in a helical path towards the output end. The hydrogen gas outlet is at the output end. The collection outlet is at the output end. Nitrogenous compounds exit the reactor chamber through the collection outlet. The ultrasonic transducer system is configured to generate ultrasonic signals that increases hydrogen generation rates within the reactor chamber. The permanent magnets also increase the reaction rates within the reactor by applying the additional stress to the ammonia molecule via the application of the Lorenz force.

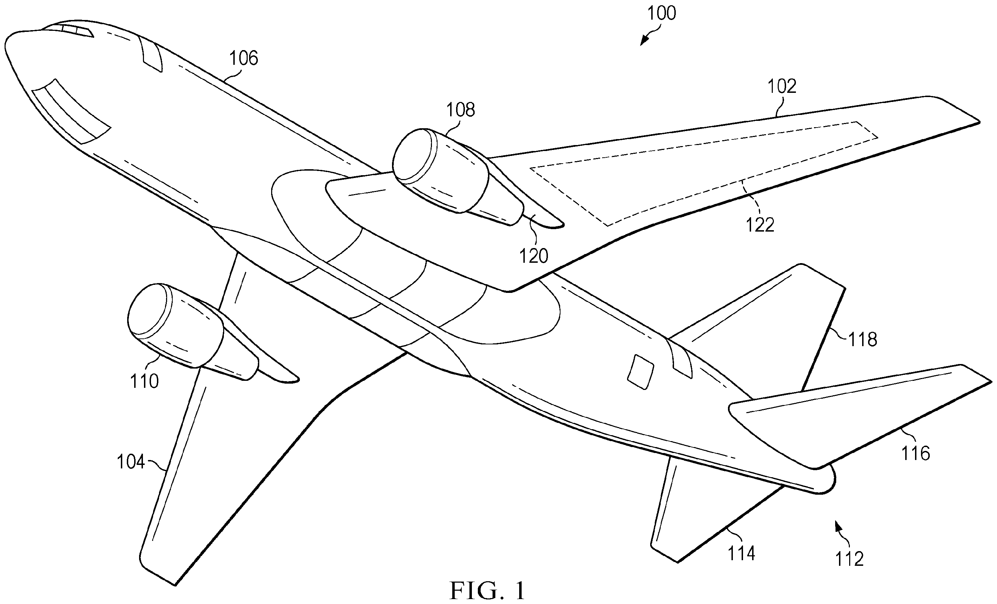

With reference now to the figures and, in particular, with reference to **Figure 1****,** a pictorial representation of an aircraft in communication with satellites is depicted in accordance with an illustrative embodiment. In this illustrative example, commercial airplane **100** has wing **102** and wing **104** attached to fuselage **106.** Commercial airplane **100** includes engine **108** attached to wing **102** and engine **110** attached to wing **104.**

Fuselage **106** has tail section **112.** Horizontal stabilizer **114,** horizontal stabilizer **116,** and vertical stabilizer **118** are attached to tail section **112** of fuselage **106.**

In this example, engine **108** and engine **110** are hydrogen propulsion systems in the form of hydrogen combustion engines that operate using hydrogen gas. Hydrogen gas generation systems that generate hydrogen gas can be located in a number of different locations in commercial airplane **100.** For example, reactors in a hydrogen gas generation system for engine **108** can be located in at least one of engine **108,** pylon **120,** or fuel tank **122.**

Further, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

The selection of locations for the reactors in the hydrogen gas generation system can be made to reduce the length of hydrogen gas fuel lines from reactors to engine **108.** Additional reactors for the hydrogen gas generation system be placed in similar locations for engine **110** to generate hydrogen gas for engine 110. In this illustrative example, the reactors in the hydrogen gas generation system generate hydrogen gas from ammonia.

As used herein, "a number of" when used with reference to items, means one or more items. For example, "a number of different types of networks" is one or more different types of networks.

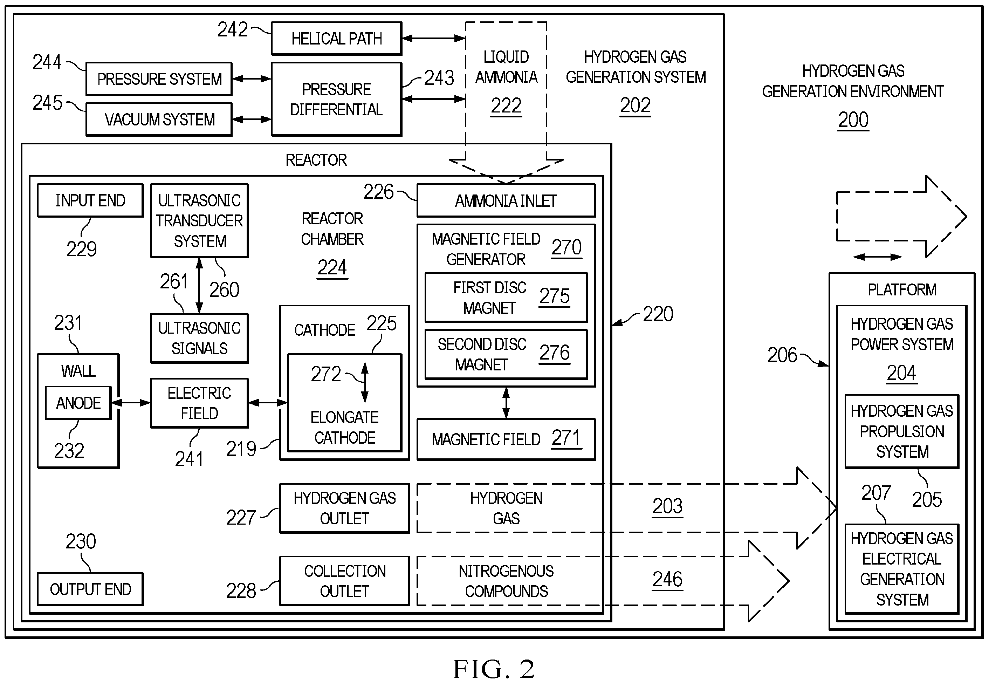

With reference now to **Figure 2****,** an illustration of a block diagram of a gas generation environment is depicted in accordance with an illustrative embodiment. In this illustrative example, hydrogen gas generation environment **200** includes components that can be implemented in commercial airplane **100** in **Figure 1****.**

In this illustrative example, hydrogen gas generation system **202** in hydrogen gas generation environment **200** generates hydrogen gas **203.** In this example, hydrogen gas **203** is used by hydrogen gas power system **204** in platform **206.**

Platform **206** can take a number of different forms. For example, platform **206** can be selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a spacecraft, a space station, a satellite, a submarine, an automobile, a power plant, a bridge, a dam, a house, a manufacturing facility, a building, and other suitable types of platforms.

In this illustrative example, hydrogen gas power system **204** uses hydrogen gas **203** to operate platform **206.** For example, when platform **206** takes the form of a vehicle such as an aircraft, hydrogen gas power system **204** can be hydrogen gas propulsion system **205** that provides at least one of thrust or power to the aircraft. In another example, when platform **206** takes the form of a building, hydrogen gas power system **204** can be a hydrogen gas electrical generation system **207** that provides electricity to operate the building.

In this illustrative example, hydrogen gas generation system **202** comprises reactor **220.** Reactor **220** uses liquid ammonia **222** to generate hydrogen gas **203.** Reactor **220** includes a number of different components. As depicted, reactor **220** comprises reactor chamber **224,** cathode **219,** ammonia inlet **226,** hydrogen gas outlet **227,** and collection outlet **228.**

Reactor chamber **224** is a physical structure with an interior. In this example, reactor chamber **224** has an input end **229** and an output end **230.** In this example, wall **231** of reactor chamber **224** is anode **232.** Further in this example, cathode **219** can be elongate cathode **225** within reactor chamber **224** and extends between the input end **229** and output end **230** through an interior of reactor chamber **224.** Elongate cathode **225** can be a cylinder, a tube, a rod, or some other similar shape.

In this example, ammonia inlet **226** is positioned to introduce liquid ammonia **222** into the reactor chamber **224** such that the liquid ammonia **222** flows in a direction from input end **229** to output end **230.**

In this illustrative example, hydrogen gas outlet **227** is located at output end **230,** wherein hydrogen gas **203** generated in reactor chamber **224** exits reactor chamber **224** through hydrogen gas outlet **227.** Collection outlet **228** is located at output end **230.** In this example, nitrogenous compounds **246** exit reactor chamber **224** through collection outlet **228.** An outlet or other component is at output end **230** when the outlet is closer to output end **230** than input end **229.**

In these illustrative examples, one component is located at an end such as output end **230,** the component may be physically located on the end. In another example, the component can be located proximate to the end. For example, hydrogen gas outlet **227** can be located on output end **230.** In another example, collection outlet **228** can be on wall **231** some distance from output end **230.** These locations are presented as examples and not meant to limit the manner in which the outlets can be positioned relative to output end **230.** For example, collection outlet **228** can also be located on output end **230** in other illustrative examples.

In this example, hydrogen gas **203** is generated using anode **232** and elongate cathode **225.** As depicted, electric field **241** generated between anode **232** and elongate cathode **225** causes hydrogen gas **203** to be generated from liquid ammonia **222.** Hydrogen gas **203** generated by this process flows out of reactor chamber **224** through hydrogen gas outlet **227.**

Not all of liquid ammonia **222** is used to generate hydrogen gas **203.** In this illustrative example, nitrogenous compounds **246** flow out of reactor chamber **224** to collection outlet **228.** Nitrogenous compounds **246** can include at least one of ammonia (NH3), nitrogen gas (N2), amide (NH2), and nitrogen hydrogen (NH).

In this example, the flow of liquid ammonia **222** through reactor chamber **224** can be controlled based on the position of ammonia inlet **226.** For example, ammonia inlet **226** can be positioned to input liquid ammonia **222** tangentially into reactor chamber **224** such that liquid ammonia **222** flows in helical path **242** towards the output end **230.**

In this example, the tangential positioning can be such that the ammonia inlet **226** introduces liquid ammonia **222** in a direction that is parallel to the surface of wall **231** in reactor chamber **224.** Further, liquid ammonia **222** can be introduced such that it is in a direction relative to an axis **272** extending centrally through reactor chamber **224** in a manner that results in a swirling or vortex motion towards output end **230.**

In this illustrative example, liquid ammonia **222** is introduced into reactor chamber **224** through ammonia inlet **226** with pressure differential **243.** Further, in this example, pressure differential **243** is present in liquid ammonia **222** between input end **229** and output end **230** of reactor chamber **224.**

Pressure differential **243** can be generated by pressure system **244.** In this example, pressure system **244** causes liquid ammonia **222** to be a pressurized liquid that is pushed towards the output end **230.** In another example, pressure differential **243** can be generated by vacuum system **245.** In this example, liquid ammonia **222** is under a vacuum and drawn towards output end **230.** In yet another illustrative example, the pressure differential can be created by both pressure system **244** and vacuum system **245.**

In these illustrative examples, additional components can be used to increase at least one of the efficiency or rate at which hydrogen gas **203** is generated. For example, hydrogen gas generation system **202** can also include ultrasonic transducer system **260.** Ultrasonic transducer system is a physical system comprised of one or more ultrasonic transducers. Ultrasonic transducer system **260** generates ultrasonic signals **261** that increase hydrogen production rates within the reactor chamber **224** and de-gases elongate cathode **225** and anode **232.**

Thus, in this example, the increase in reaction rate in generating hydrogen gas **203** can be the result of ultrasonic energy introduced into the flow of liquid ammonia **222.** The de-gassing involves the agitation of hydrogen molecules on elongate cathode **225** and nitrogenous compounds **246** that form on anode **232.** The de-gassing is a physical force on the hydrogen gas bubbles formed from electrolysis caused by electric field **241.**

In this example, ultrasonic energy in ultrasonic signals **261** pushes hydrogen gas **203** formed on elongate cathode **225** to hydrogen gas outlet **227** and gas in nitrogenous compounds **246** formed on elongate cathode **225** to collection outlet **228.** The energy in ultrasonic signals **261** agitates liquid ammonia **222** to release hydrogen gas **203** in addition to pushing the hydrogen gas **203** towards output end **230.** Thus, ultrasonic signals **261** push hydrogen gas bubbles from elongate cathode **225** and nitrogenous compounds from anode **232.**

In another illustrative example, hydrogen gas generation system **202** can also include magnetic field generator **270,** which is a hardware system that generates magnetic field **271.** In this example, magnetic field generator **270** generates magnetic field **271** in a field direction that is aligned with an axis **272** extending centrally through reactor chamber **224.** In this example, axis **272** extends centrally through the elongate cathode **225.** In this case, elongate cathode **225** also extends centrally within reactor chamber **224.** In this example, magnetic field **271** increases hydrogen gas production using a Lorenz force.

In this example, liquid ammonia **222** is a polar molecule and can be affected by magnetic field **271** much like water. The generation of magnetic field **271** along axis **272** can increase hydrogen production by introducing the Lorentz force without additional energy being used to generate hydrogen gas **203.** In other words, this increase in hydrogen gas production can occur without using additional input energy into hydrogen gas generation system **202.** This can occur when magnetic field generator **270** uses permanent magnets that do not require energy to generate magnetic field **271.**

In one example, magnetic field generator **270** comprises first disc magnet **275** and second disc magnet **276.** First disc magnet **275** can be located proximate to ammonia inlet **226.** Second disc magnet **276** can be proximal to hydrogen gas outlet **227.** In this example, these disc magnets are permanent magnets that increase the reaction rates within the reactor. The magnetic fields generated by these magnets apply additional stress to the ammonia molecule via the application of the Lorenz Force. This occurs without needing energy to increase the hydrogen generation rate.

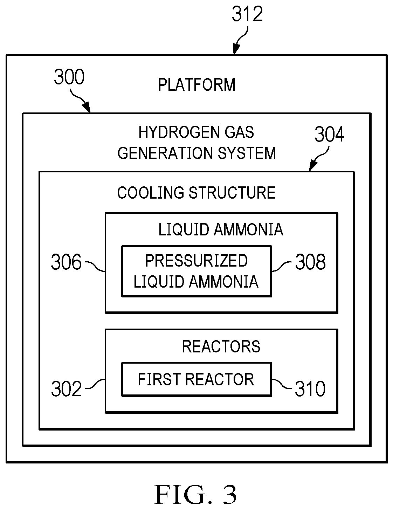

With reference next to **Figure 3****,** an illustration of a block diagram of a hydrogen gas generation system using multiple reactors is depicted in accordance with an illustrative embodiment. In this example, hydrogen gas generation system **300** is an example of a system that can also be used in hydrogen gas generation environment **200** to provide fuel for platform **206.**

In this example, hydrogen gas generation system **300** comprises reactors **302.** In this example, each reactor in reactors **302** can be implemented as reactor **220** in **Figure 2****.** In this example, reactors **302** are connected in series with the collection outlet of one reactor being connected to the ammonia inlet of the next reactor in the series. Additionally, cooling structure **304** can also be present in hydrogen gas generation system **300.** In this example, reactors **302** are located within cooling structure **304.** This cooling structure is a physical structure that provides cooling for reactors **302.** In this example, liquid ammonia **306** is fed into cooling structure **304.** Liquid ammonia **306** can be pressurized liquid ammonia **308.** This liquid ammonia is fed into cooling structure **304** before being pumped into first reactor **310** in reactors **302.**

In this example, cooling structure **304** and the other components in hydrogen gas generation system **300** can be located in platform **312,** which can be selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a spacecraft, a space station, a satellite, a submarine, an automobile, a power plant, a bridge, a dam, a house, a manufacturing facility, and a building.

The illustration of hydrogen gas generation environment **200** in the different components in this environment in **Figures 2-3** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, ammonia inlet **226** can be positioned to introduce liquid ammonia **222** into reactor chamber **224** such that liquid ammonia **222** flows towards the output end **230** without traveling in helical path **242.** For example, the path can be a straight path, an angled path, or some other path other than helical path **242.** As another example, other components such as fuel lines or fuel cells for the hydrogen gas fuel can be present although these components are not shown.

As another example, anode **232** can be input end **229** and cathode **219** can be output end **230.** With this positioning of the electrodes, magnetic field generator **270** can include a first magnet that is part of or connected to wall **231** and a second magnet can be in the form a cylinder extending centrally within reactor chamber **224.** These two magnets are configured to generate magnetic field **271** to point from wall **231** to the cylinder.

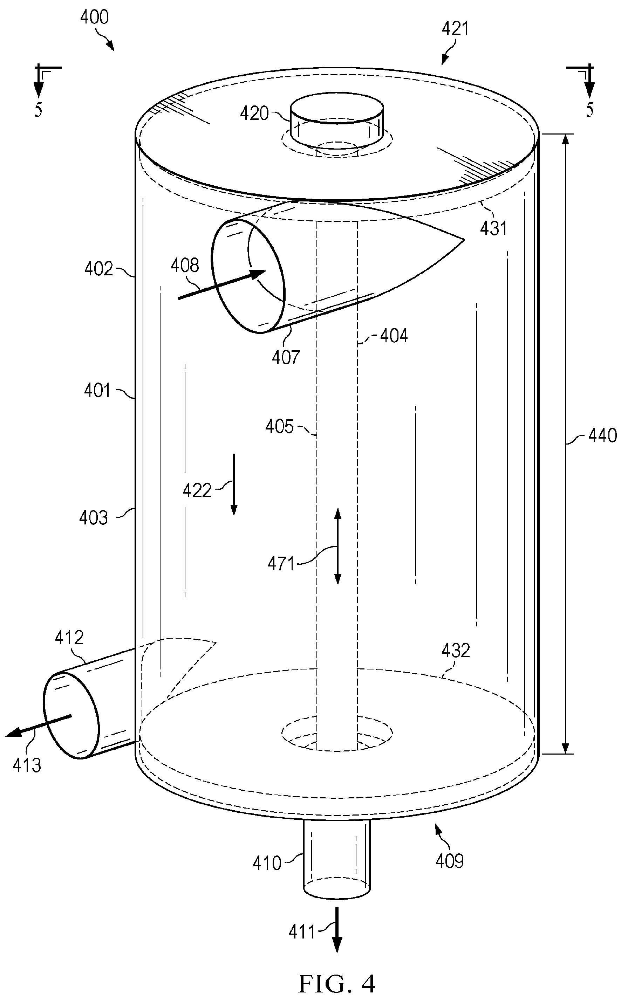

Next in **Figure 4****,** an illustration of an isometric view of a reactor is depicted in accordance with an illustrative embodiment. In this illustrative example, an isometric view of reactor **400** is an example of an implementation for reactor **220** in **Figure 2** and reactors **302** in **Figure 3****.**

As depicted, reactor **400** comprises reactor chamber **401,** which is in the form of a cylinder with a cavity. In this example, anode **402** is wall **403** of reactor chamber **401.** As depicted, cathode **404** is formed by inner cylinder **405.** Axis **471** extends centrally through inner cylinder **405** and reactor chamber **401.**

Ammonia inlet **407** is tangential to reactor chamber **401.** This inlet introduces liquid ammonia **408** such that liquid ammonia **408** travels in a helical path towards the output end **409** of reactor chamber **401.**

Further in this example, hydrogen gas outlet **410** is located at output end **409.** In this example, hydrogen gas outlet **410** is located at output end **409** by being on output end **409.** As depicted, hydrogen gas **411** flows out of reactor chamber **401** through hydrogen gas outlet **410.** In this example, inner cylinder **405** for cathode **404** extends into hydrogen gas outlet **410.**

As depicted, collection outlet **412** is also located at output end **409.** In this example, collection outlet **412** is located at output end by being in wall **403** or in a location proximate to or adjacent to output end **409.** Thus, being located at output end **409** can be on, proximate, or adjacent to output end **409.** As shown in this example, nitrogenous compounds **413** flow out of reactor chamber **401** through collection outlet **412.**

In this illustrative example, ultrasonic transducer **420** is located at input end **421** of reactor chamber **401.** Ultrasonic transducer **420** is positioned to generate ultrasonic signals that travel in direction **422** through reactor chamber **401.** This direction is aligned with axis **471** in this example.

Additionally, first disc magnet **431** and second disc magnet **432** are present and generate a magnetic field in a direction aligned with axis **471.** This magnetic field increases the rate in generating hydrogen gas **411** using the Lorenz force. In this example, reactor chamber **401** of reactor **400** has height **440** that is about 15,24 cm (namely, six inches) from input end **421** to output end **409.**

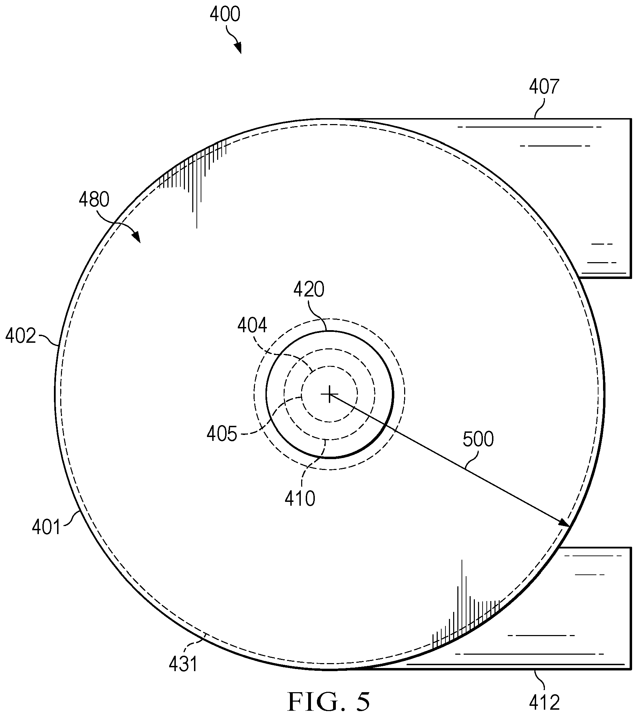

Turning next to **Figure 5****,** an illustration of a top view of a reactor is depicted in accordance with an illustrative embodiment. In this example, this view is a top view of input end **421** taken in the direction of lines **5-5** in **Figure 4****.** In this view, reactor chamber **401** has radius **500** that is about 5,08 cm (namely, two inches) in this example.

The illustration of reactor **400** in **Figure 4** and **Figure 5** is provided as an example implementation of reactor **220** in **Figure 2** and reactors **302** in **Figure 3****.** This illustration is not meant to limit the manner in which a reactor can be implemented in other illustrative examples. In another illustrative example, reactor chamber **401** can have a conical shape such as a tapered cylinder. In yet another example, reactor chamber **401** can be a hexagonal or other type of cylinder. The particular shape selected for reactor chamber **401** can depend on the particular implementation or usage.

The illustration of reactor **400** in **Figures 4-5** is one example of reactor **220** in **Figure 2** and not meant to limit the manner in which reactors can be implemented in other examples. For example, the position of the magnets and the electrodes can change. In another example, the anode can be input end **421** of reactor **400** and the cathode can be output end **409** of reactor **400.** In this example, wall **403** and inner cylinder **405** are the magnets. Further, in the example, the magnetic field can be aligned to point from wall **403** to inner cylinder **405** of reactor **400.**

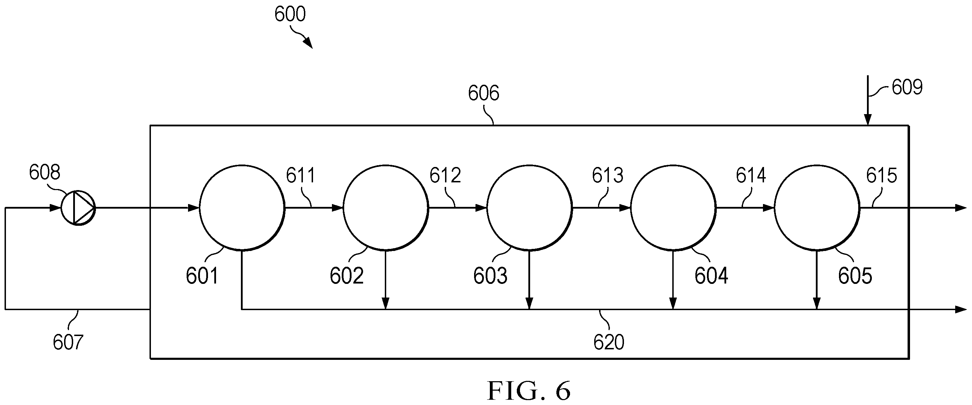

With reference next to **Figure 6****,** an illustration of a schematic diagram of a hydrogen gas generation system with multistage reactors is depicted in accordance with an illustrative embodiment. In this example, hydrogen gas generation system **600** is an example of an implementation for hydrogen gas generation system **300** in **Figure 3****.**

In this example, hydrogen gas generation system **600** includes five reactors: reactor **601,** reactor **602,** reactor **603,** reactor **604,** and reactor **605.** These reactors are located in cooling structure **606.** In this example, cooling structure **606** is a physical structure in the form of a cooling jacket.

In this example, liquid ammonia is input into cooling structure **606** through coolant feedline **609.** This liquid ammonia provides coolant for the different components within cooling structure **606** such as reactor **601,** reactor **602,** reactor **603,** reactor **604,** and reactor **605.** This liquid ammonia travels to the ammonia inlet of reactor **601** through liquid ammonia feedline **607.** In this example, pump **608** pumps the liquid ammonia through liquid ammonia feedline **607** into reactor **601.** This pump is an example of a pressure system that generates a pressure differential to form pressurized liquid ammonia that enters the ammonia inlet of reactor **601.**

As depicted, these reactors are connected in series. As depicted, the output of each reactor is a collection outlet that is connected to the ammonia inlet of the next reactor in the series. In this example, the collection outlet of reactor **601** is connected to the ammonia inlet of reactor **602** by liquid ammonia feedline **611;** the collection outlet of reactor **602** is connected to the ammonia inlet of reactor **603** by liquid ammonia feedline **612;** the collection outlet of reactor **603** is connected to the ammonia inlet of reactor **604** by liquid ammonia feedline **613;** and the collection outlet of reactor **604** is connected to the ammonia inlet of reactor **605** by liquid ammonia feedline **614.**

By sending the nitrogenous compounds output from one reactor into another reactor, further refinement of ammonia in the nitrogenous compounds can be used in gas generation. As a result more of the ammonia is converted into hydrogen gas.

The collection outlet of the last reactor, reactor **605,** is output from cooling structure **606** by reactor system outlet **615.** In this example, the nitrogenous compounds from reactor **605** can be recirculated into cooling structure **606,** additional stages of cooling structures with reactors, or discarded.

As depicted, the hydrogen gas outlets of reactor **601,** reactor **602,** reactor **603,** reactor **604,** and reactor **605** are connected to hydrogen gas fuel line **620.** This fuel line can be connected to a propulsion system in a platform such as an aircraft. This fuel line can be connected to a fuel cell in the propulsion system or other system that generates power or thrust for a platform.

Illustration of hydrogen gas generation system **600** in **Figure 6** is an example of one implementation for hydrogen gas generation system **202** in **Figure 2** and hydrogen gas generation system **300** in **Figure 3****.** This illustration is one example and not meant to limit the manner in which other examples can be implemented. For example, other illustrative examples can have other numbers of reactors such as 5 reactors or 10 reactors. In yet another illustrative example, hydrogen gas generation system **600** can have one or more cooling structures in addition to cooling structure **606** with reactors that also generate hydrogen gas. In yet another illustrative example, additional reactors can be present in cooling structure in parallel to the depicted reactors in which these additional reactors are connected in series to generate hydrogen gas.

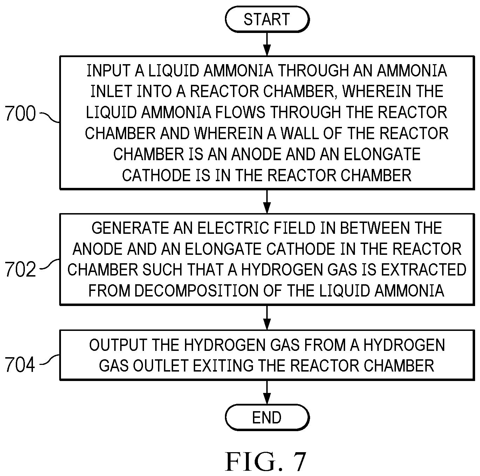

Turning next to **Figure 7****,** an illustration of a flowchart of a process for generating hydrogen gas is depicted in accordance with an illustrative embodiment. The process in **Figure 7** can be implemented in hydrogen gas generation system **202** in **Figure 2****,** hydrogen gas generation system **300** in **Figure 3****,** and hydrogen gas generation system **600** in **Figure 6****.**

The process begins by inputting a liquid ammonia through an ammonia inlet into a reactor chamber, wherein the liquid ammonia flows through the reactor chamber and wherein the wall of the reactor chamber is an anode and an elongate cathode is in the reactor chamber (operation **700).** The process generates an electric field in between the anode and an elongate cathode in the reactor chamber such that a hydrogen gas is extracted from decomposition of the liquid ammonia (operation **702).**

The process outputs the hydrogen gas from a hydrogen gas outlet exiting the reactor chamber (operation **704).** The process terminates thereafter.

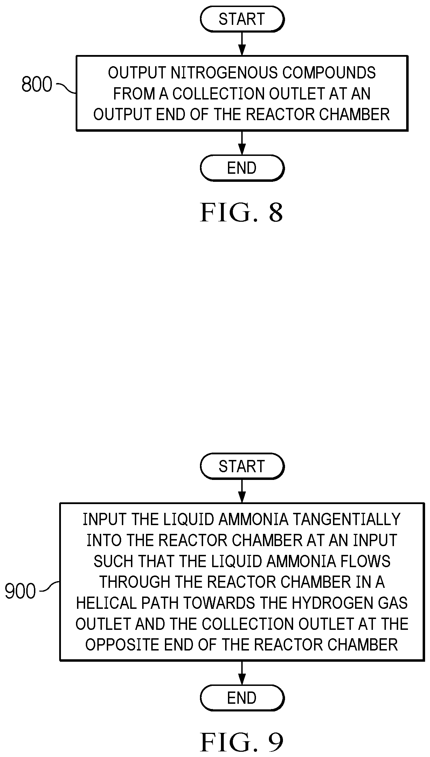

In **Figure 8****,** an illustration of a flowchart of a process for outputting nitrogenous compounds in generating hydrogen gas is depicted in accordance with an illustrative environment. The process in this figure is an example of an operation that can be performed with the operations in **Figure 7****.**

The process outputs nitrogenous compounds from a collection outlet at an output at the end of the reactor chamber (operation **800).** The process terminates thereafter.

With reference next to **Figure 9****,** an illustration of a flowchart of a process for inputting liquid ammonia to generate hydrogen gas is depicted in accordance with an illustrative embodiment. The process in this figure is an example of an operation that can be performed with the operations in **Figure 7****.**

The process inputs the liquid ammonia tangentially into the reactor chamber at an input such that the liquid ammonia flows through the reactor chamber in a helical path towards the hydrogen gas outlet and the collection outlet at the opposite end of the reactor chamber (operation **900).** The process terminates thereafter.

The flowcharts and block diagrams in the different depicted embodiments illustrate the architecture, functionality, and operation of some possible implementations of apparatuses and methods in an illustrative embodiment. In this regard, each block in the flowcharts or block diagrams can represent at least one of a module, a segment, a function, or a portion of an operation or step. For example, one or more of the blocks can be implemented as program instructions, hardware, or a combination of the program instructions and hardware. When implemented in hardware, the hardware can, for example, take the form of integrated circuits that are manufactured or configured to perform one or more operations in the flowcharts or block diagrams. When implemented as a combination of program instructions and hardware, the implementation may take the form of firmware. Each block in the flowcharts or the block diagrams can be implemented using special purpose hardware systems that perform the different operations or combinations of special purpose hardware and program instructions run by the special purpose hardware.

In some alternative implementations of an illustrative embodiment, the function or functions noted in the blocks may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

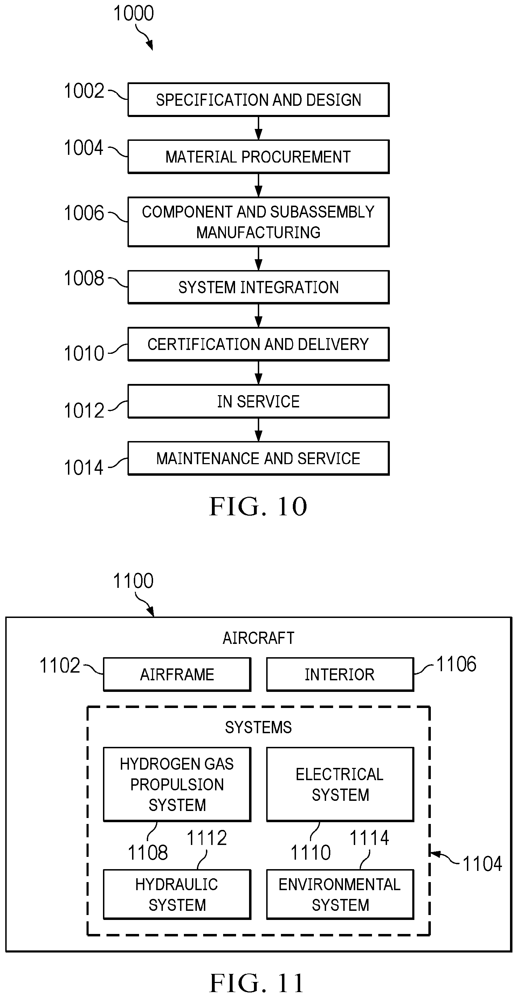

Illustrative embodiments of the disclosure may be described in the context of aircraft manufacturing and service method **1000** as shown in **Figure 10** and aircraft **1100** as shown in **Figure 11****.** Turning first to **Figure 10****,** an illustration of a block diagram of an aircraft manufacturing and service method is depicted in accordance with an illustrative embodiment. During pre-production, aircraft manufacturing and service method **1000** may include specification and design **1002** of aircraft **1100** in **Figure 11** and material procurement **1004.**

During production, component and subassembly manufacturing **1006** and system integration **1008** of aircraft **1100** in **Figure 11** takes place. Thereafter, aircraft **1100** in **Figure 11** can go through certification and delivery **1010** in order to be placed in service **1012.** While in service **1012** by a customer, aircraft **1100** in **Figure 11** is scheduled for routine maintenance and service **1014,** which may include modification, reconfiguration, refurbishment, and other maintenance or service.

Each of the processes of aircraft manufacturing and service method **1000** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 11****,** an illustration of a block diagram of an aircraft is depicted in which an illustrative embodiment may be implemented. In this example, aircraft **1100** is produced by aircraft manufacturing and service method **1000** in **Figure 10** and may include airframe **1102** with plurality of systems **1104** and interior **1106.** Examples of systems **1104** include one or more of hydrogen gas propulsion system **1108,** electrical system **1110,** hydraulic system **1112,** and environmental system **1114.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1000** in **Figure 10****.**

In one illustrative example, components or subassemblies produced in component and subassembly manufacturing **1006** in **Figure 10** can be fabricated or manufactured in a manner similar to components or subassemblies produced while aircraft **1100** is in service **1012** in **Figure 10****.** As yet another example, one or more apparatus embodiments, method embodiments, or a combination thereof can be utilized during production stages, such as component and subassembly manufacturing **1006** and system integration **1008** in **Figure 10****.** One or more apparatus embodiments, method embodiments, or a combination thereof may be utilized while aircraft **1100** is in service **1012,** during maintenance and service **1014** in **Figure 10****,** or both. The use of a number of the different illustrative embodiments may substantially expedite the assembly of aircraft **1100,** reduce the cost of aircraft **1100,** or both expedite the assembly of aircraft **1100** and reduce the cost of aircraft **1100.**

For example, a hydrogen gas generation system can be manufactured during component and subassembly manufacturing **1006** and integrated into aircraft **1100** during system integration **1008.** As another example, this type of hydrogen gas generation system can be added to aircraft **1100** to generate fuel for a hydrogen gas propulsion system in aircraft **1100** during maintenance and service **1014.** This addition of the hydrogen gas generation system can be part of modification, reconfiguration, refurbishment, and other maintenance or service that occurs in maintenance and service **1014.** In this illustrative example, the hydrogen gas generation system can operate during in service **1012** to supply gas as a fuel for hydrogen gas propulsion system **1108** in aircraft **1100.**

Thus, illustrative examples provide a method, apparatus, and system for generating hydrogen gas. The hydrogen gas can be used as fuel or energy by platforms. The hydrogen gas can be used to provide power, thrust, or both for a platform. In one illustrative example, hydrogen gas generation system comprising a reactor chamber, an elongate cathode, an ammonia inlet, a hydrogen gas outlet, and a collection outlet. The reactor chamber has an input end and an output end. A wall of the reactor chamber between the input end and the output end is an anode. The elongate cathode extends between the input end and the output end through an interior of the reactor chamber. The ammonia inlet is positioned to introduce a liquid ammonia into the reactor chamber such that the liquid ammonia flows in a direction from the input end to the output end. The hydrogen gas outlet at the output end, wherein a hydrogen gas generated in the reactor chamber exits the reactor chamber through the hydrogen gas outlet. The collection outlet is at the output end. Nitrogenous compounds exit the reactor chamber through the collection outlet.

As a result, the generation of hydrogen gas in a platform such as an aircraft has advantages over current sources of hydrogen gas for propulsion systems generating thrust and power. In the illustrative examples, generating hydrogen gas from liquid ammonia on board an aircraft is more efficient in terms of volume and storage temperatures as compared to cryogenic hydrogen.

Further, the illustrative examples provide an increased rate in generating hydrogen. In one illustrative example, an ultrasonic transducer system can generate ultrasonic signals that increase the generation of hydrogen and de-gas anodes and cathodes. Further, a magnetic field generator can be implemented that generates magnetic fields that also increase the rate in generating hydrogen gas using the Lorenz force. Further, the use of the magnetic field generator does not require additional energy when materials such as permanent magnetic discs are used.

The description of the different illustrative embodiments has been presented for purposes of illustration and description and is not intended to be exhaustive or limited to the embodiments in the form disclosed. The different illustrative examples describe components that perform actions or operations. In an illustrative embodiment, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements. Also, where a certain quantity is indicated both in SI system and in United States customary units and doubt arises as to the correct numeric value, the United States customary units shall prevail.

Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

While the scope of protection is determined by the appended claims, realizations of the present disclosure can be made in many different ways, including those according to the following Clauses.
**Clause 1.** A hydrogen gas generation system comprising:
   a reactor chamber having an input end and an output end, wherein a wall of the reactor chamber between the input end and the output end is an anode;
   an elongate cathode extending between the input end and the output end through an interior of the reactor chamber;
   an ammonia inlet positioned to introduce a liquid ammonia into the reactor chamber such that the liquid ammonia flows in a direction from the input end to the output end;
   a hydrogen gas outlet at the output end, wherein a hydrogen gas generated in the reactor chamber exits the reactor chamber through the hydrogen gas outlet; and
   a collection outlet at the output end, wherein nitrogenous compounds exit the reactor chamber through the collection outlet.
**Clause 2.** The hydrogen gas generation system of Clause 1 further comprising:
   an ultrasonic transducer system configured to generate ultrasonic signals that increases hydrogen generation rates within the reactor chamber and de-gas the anode and the elongate cathode.
**Clause 3.** The hydrogen gas generation system of Clause 1 further comprising:
   a magnetic field generator that generates a magnetic field in a field direction that is aligned with an axis extending centrally through the reactor chamber and centrally through the elongate cathode.
**Clause 4.** The hydrogen gas generation system of Clause 3, wherein the magnetic field generator comprises:
   a first disc magnet proximal to the ammonia inlet; and
   a second disc magnet proximal to the hydrogen gas outlet.
**Clause 5.** The hydrogen gas generation system of Clause 1, wherein the ammonia inlet is positioned to input the liquid ammonia tangentially into the reactor chamber such that the liquid ammonia flows in a helical path towards the output end.
**Clause 6.** The hydrogen gas generation system of Clause 1, wherein a pressure differential is present in the liquid ammonia between the input end and the output end of the reactor chamber.
**Clause 7.** The hydrogen gas generation system of Clause 1, wherein pressure differential is generated by a pressure system.
**Clause 8.** The hydrogen gas generation system of Clause 1, wherein pressure differential is generated by a vacuum system.
**Clause 9.** The hydrogen gas generation system of Clause 1, wherein an electric field generated between the anode and the elongate cathode causes the hydrogen gas to be generated from decomposition of the liquid ammonia.
**Clause 10.** The hydrogen gas generation system of Clause 1, wherein the reactor chamber is located in a platform selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a spacecraft, a space station, a satellite, a submarine, an automobile, a power plant, a bridge, a dam, a house, a manufacturing facility, and a building.
**Clause 11.** A hydrogen gas generation system comprising:
   a reactor chamber having an input end and an output end, wherein a wall of the reactor chamber between the input end and the output end is an anode;
   an elongate cathode extending between the input end and the output end through an interior of the reactor chamber;
   an ammonia inlet positioned to input a pressurized liquid ammonia tangentially into the reactor chamber such that the pressurized liquid ammonia flows in a helical path towards the output end;
   a hydrogen gas outlet at the output end;
   a collection outlet at the output end, wherein nitrogenous compounds exit the reactor chamber through the collection outlet; and
   an ultrasonic transducer system configured to generate ultrasonic signals that increases hydrogen generation rates within the reactor chamber.
**Clause 12.** The hydrogen gas generation system of Clause 11, wherein the ultrasonic signals increase hydrogen generation rates within the reactor chamber and de-gas the elongate cathode and the anode.
**Clause 13.** The hydrogen gas generation system of Clause 11 further comprising:
   a magnetic field generator that generates a magnetic field in a direction that is aligned with an axis extending centrally through the reactor chamber, wherein the axis extends centrally through the elongate cathode.
**Clause 14.** The hydrogen gas generation system of Clause 13, wherein the magnetic field generator comprises:
   a first disc magnet proximal to the ammonia inlet; and
   a second disc magnet proximal to the hydrogen gas outlet.
**Clause 15.** A hydrogen gas generation system comprising:
   reactors, wherein each reactor in the reactors comprises:
      a reactor chamber having an input end and an output end, wherein a wall of the reactor is an anode;
   an elongate cathode extending between the input end and the output end through an interior of the reactor chamber;
   an ammonia inlet positioned to input a pressurized liquid ammonia tangentially into the reactor chamber such that the pressurized liquid ammonia flows in a helical path towards the output end;
   a hydrogen gas outlet at the output end;
   a collection outlet at the output end, wherein nitrogenous compounds exit the reactor chamber through the collection outlet; and
   an ultrasonic transducer system configured to generate ultrasonic signals that increases hydrogen generation rates within the reactor chamber, wherein the reactors are connected in series with the collection outlet of one reactor being connected to the ammonia inlet of a next reactor in the series.
**Clause 16.** The hydrogen gas generation system of Clause 15 further comprising:
   a cooling structure, wherein the reactors are located within the cooling structure.
**Clause 17.** The hydrogen gas generation system of Clause 16, wherein:
   the pressurized liquid ammonia is fed into the cooling structure prior to being pumped into a first reactor in the reactors.
**Clause 18.** The hydrogen gas generation system of claim 16, wherein the cooling structure with the reactors are located in a platform selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a spacecraft, a space station, a satellite, a submarine, an automobile, a power plant, a bridge, a dam, a house, a manufacturing facility, and a building.
**Clause 19.** A hydrogen gas generation system comprising:
   a reactor chamber having an input end and an output end;
   an anode;
   a cathode;
   an ammonia inlet positioned to introduce a liquid ammonia into the reactor chamber such that the liquid ammonia flows in a direction from the input end to the output end;
   a hydrogen gas outlet at the output end, wherein a hydrogen gas generated in the reactor chamber exits the reactor chamber through the hydrogen gas outlet; and
   a collection outlet at the output end, wherein nitrogenous compounds exit the reactor chamber through the collection outlet.
**Clause 20.** The hydrogen gas generation system of Clause 19, wherein:
   a wall of the reactor chamber between the input end and the output end is the anode; and
   the cathode is an elongate cathode extending between the input end and the output end through an interior of the reactor chamber.
**Clause 21.** The hydrogen gas generation system of Clause 19, wherein:
   the input end of the reactor chamber is the anode; and
   the output end of the reactor chamber is the cathode.
**Clause 22.** A method of generating hydrogen gas, the method comprising:
   inputting a liquid ammonia through an ammonia inlet into a reactor chamber, wherein the liquid ammonia flows through the reactor chamber and wherein a wall of the reactor chamber is an anode and an elongate cathode is in the reactor chamber;
   generating an electric field in between the anode and the elongate cathode in the reactor chamber such that a hydrogen gas is extracted from decomposition of the liquid ammonia; and
   outputting the hydrogen gas from a hydrogen gas outlet exiting the reactor chamber.
**Clause 23.** The method of Clause 22 further comprising:
   outputting nitrogenous compounds from a collection outlet at an output at end of the reactor chamber.
**Clause 24.** The method of Clause 23, wherein inputting the liquid ammonia comprises:
   inputting the liquid ammonia tangentially into the reactor chamber at an input such that the liquid ammonia flows through the reactor chamber in a helical path towards the hydrogen gas outlet and the collection outlet at the opposite end of the reactor chamber.

## Claims

1. A hydrogen gas generation system (202, 300, 600) comprising:
a reactor chamber (224, 401) having an input end (229, 421) and an output end (230, 409);
an anode (232, 402);
a cathode (219);
an ammonia inlet (226, 407) positioned to introduce a liquid ammonia (222, 306, 408) into the reactor chamber (224, 401) such that the liquid ammonia (222, 306, 408) flows in a direction from the input end (229, 421) to the output end (230, 409);
a hydrogen gas outlet (227, 410) at the output end (230, 409), wherein a hydrogen gas generated in the reactor chamber (224, 401) exits the reactor chamber (224, 401) through the hydrogen gas outlet (227, 410); and
a collection outlet (228, 412) at the output end (230, 409), wherein nitrogenous compounds (246, 413) exit the reactor chamber (224, 401) through the collection outlet (228, 412).

2. The hydrogen gas generation system (202, 300, 600) of claim 1, wherein:
a wall (231, 403) of the reactor chamber (224, 401) between the input end (229, 421) and the output end (230, 409) is the anode (232, 402); and
the cathode (219) is an elongate cathode (225) extending between the input end (229, 421) and the output end (230, 409) through an interior of the reactor chamber (224, 401).

3. The hydrogen gas generation system (202, 300, 600) of claim 1, wherein:
the input end (229, 421) of the reactor chamber (224, 401) is the anode (232, 402); and
the output end (230, 409) of the reactor chamber (224, 401) is the cathode (219).

4. The hydrogen gas generation system (202, 300, 600) of claim 2 further comprising:
an ultrasonic transducer system (260) configured to generate ultrasonic signals (261) that increases hydrogen generation rates within the reactor chamber (224, 401), and optionally to de-gas the anode (232, 402) and the elongate cathode (225).

5. The hydrogen gas generation system (202, 300, 600) of any one of claim 2 or 4 further comprising:
a magnetic field generator (270) that generates a magnetic field in a field direction that is aligned with an axis (272, 471) extending centrally through the reactor chamber (224, 401) and centrally through the elongate cathode (225), preferably wherein the magnetic field generator (270) comprises:
a first disc magnet (275, 431) proximal to the ammonia inlet (226, 407); and
a second disc magnet (276, 432) proximal to the hydrogen gas outlet (227, 410).

6. The hydrogen gas generation system (202, 300, 600) of any one of claims 1 to 5, wherein the ammonia inlet (226, 407) is positioned to input the liquid ammonia (222, 306, 408) tangentially into the reactor chamber (224, 401) such that the liquid ammonia (222, 306, 408) flows in a helical path (242) towards the output end (230, 409) .

7. The hydrogen gas generation system (202, 300, 600) of any one of claims 1 to 6, wherein a pressure differential (243) is present in the liquid ammonia (222, 306, 408) between the input end (229, 421) and the output end (230, 409) of the reactor chamber (224, 401), preferably wherein the pressure differential (243) is generated by a pressure system (244) or
by a vacuum system (245).

8. The hydrogen gas generation system (202, 300, 600) of claim 2 and any one of claims 4 to 7, wherein an electric field generated between the anode (232, 402) and the elongate cathode (225) causes the hydrogen gas to be generated from decomposition of the liquid ammonia (222, 306, 408) .

9. A hydrogen gas generation system (202, 300, 600) comprising:
reactors, wherein each reactor in the reactors is according to any one of claims 1 to 8,
wherein the reactors are connected in series with the collection outlet (228, 412) of one reactor being connected to the ammonia inlet (226, 407) of a next reactor in the series.

10. The hydrogen gas generation system (202, 300, 600) of claim 9 further comprising:
a cooling structure (304), wherein the reactors are located within the cooling structure.

11. The hydrogen gas generation system (202, 300, 600) of claim 10, wherein a pressure differential (243) is present in the liquid ammonia (222, 306, 408) between the input end (229, 421) and the output end (230, 409) of the reactor chamber (224, 401), and
the pressurized liquid ammonia (222, 306, 408) is fed into the cooling structure (304) prior to being pumped into a first reactor in the reactors.

12. The hydrogen gas generation system (202, 300, 600) according to claim 10 or 11, wherein the cooling structure with the reactors are located in a platform (206) selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a spacecraft, a space station, a satellite, a submarine, an automobile, a power plant, a bridge, a dam, a house, a manufacturing facility, and a building,
or alternatively according to claim 9, wherein the reactors are located in a platform (206) selected from a group comprising a mobile platform, a stationary platform, a land-based structure, an aquatic-based structure, a space-based structure, an aircraft, a commercial aircraft, a rotorcraft, a tilt-rotor aircraft, a tilt wing aircraft, a vertical takeoff and landing aircraft, an electrical vertical takeoff and landing vehicle, a personal air vehicle, a surface ship, a tank, a personnel carrier, a train, a spacecraft, a space station, a satellite, a submarine, an automobile, a power plant, a bridge, a dam, a house, a manufacturing facility, and a building.

13. A method of generating hydrogen gas, the method comprising:
inputting (700) a liquid ammonia (222, 306, 408) through an ammonia inlet (226, 407) into a reactor chamber (224, 401), wherein the liquid ammonia (222, 306, 408) flows through the reactor chamber (224, 401) and wherein the wall (231, 403) of the reactor chamber (224, 401) is an anode (232, 402) and an elongate cathode (225) is in the reactor chamber (224, 401);
generating (702)an electric field in between the anode (232, 402) and the elongate cathode (225) in the reactor chamber (224, 401) such that a hydrogen gas is extracted from decomposition of the liquid ammonia (222, 306, 408); and
outputting (704) the hydrogen gas from a hydrogen gas outlet (227, 410) exiting the reactor chamber (224, 401) .

14. The method of claim 13 further comprising:
outputting (800) nitrogenous compounds (246, 413) from a collection outlet (228, 412) at an output at end of the reactor chamber (224, 401).

15. The method of claim 13 or 14, wherein inputting the liquid ammonia (222, 306, 408) comprises:
inputting (900) the liquid ammonia (222, 306, 408) tangentially into the reactor chamber (224, 401) at an input such that the liquid ammonia (222, 306, 408) flows through the reactor chamber (224, 401) in a helical path (242) towards the hydrogen gas outlet (227, 410) and the collection outlet (228, 412) at the opposite end of the reactor chamber (224, 401).
